(19) **Europäisches Patentamt**

**European Patent Office**

**Office européen des brevets**

(11) **EP 0 892 831 B1**

(12) **EUROPEAN PATENT SPECIFICATION**

(45) Date of publication and mention
of the grant of the patent:
**10.05.2000 Bulletin 2000/19**

(51) Int Cl.[7]: **C08L 23/16**, C08L 23/10,
C08L 101/00, D01F 6/46

(21) Application number: **97907474.7**

(22) Date of filing: **18.03.1997**

(86) International application number:
**PCT/NL97/00136**

(87) International publication number:
**WO 97/39059 (23.10.1997 Gazette 1997/45)**

(54) **THERMOPLASTIC ELASTOMER**

THERMOPLASTISCHES ELASTOMER

ELASTOMERE THERMOPLASTIQUE

(84) Designated Contracting States:
**BE DE ES FR GB IT NL SE**

(30) Priority: **12.04.1996 EP 96200994**
**12.04.1996 US 15295 P**

(43) Date of publication of application:
**27.01.1999 Bulletin 1999/04**

(73) Proprietor: **DSM N.V.**
**6411 TE Heerlen (NL)**

(72) Inventors:
• **SCHEPERS, Herman, Augustinus, Johannes**
**NL-6171 LC Stein (NL)**
• **CREVECOEUR, Guido**
**NL-5643 TE Eindhoven (NL)**
• **WILLEMS, Edwin**
**6136 BV Sittard (NL)**

(56) References cited:
**EP-A- 0 320 001          EP-A- 0 452 089**
**EP-A- 0 634 453**

• **PATENT ABSTRACTS OF JAPAN vol. 017, no.
567 (C-1120), 14 October 1993 & JP 05 163396 A
(TONEN CHEM CORP), 29 June 1993, &
DATABASE WPI Derwent Publications Ltd.,
London, GB; AN 93-240113**

**Description**

The invention relates to a thermoplastic elastomer comprising a blend of a rubber and a thermoplastic resin, the rubber being at least partially cured.

Such a product is known from US-A-4,130,535, where a cured (or vulcanized) thermoplastic elastomer (or thermoplastic vulcanizate, TPV) is made from a polyolefin resin and an olefin rubber.

The at least partially cured state of the thermoplastic elastomer is obtainable by subjecting the rubber or a blend of uncured rubber and thermoplastic resin to a curing process. This process can be static or dynamic and be done by the use of known curing agents, like peroxides or phenolic resins.

A defect of such a thermoplastic elastomer is that the hardness of such a product, at a same amount of rubber, can hardly be lowered without sacrifying on properties. One of the possibilities to obtain a lower hardness thermoplastic elastomer is the use of styrene block copolymers, either as such or in combination with the TPV. This ingredient is however expensive and its use is therefore restricted. An alternative is the addition of extender oil for lowering the hardness, but apart from the fact that the hardness reduction is relative small, other physical properties (like tensile strength) deteriorate. This addition also results in increased fogging of the product (i.e. ingredients evaporate from the surface) as well as the sweating-out of the oil (i.e. the oil migrates to the surface of the product and gives it an oily appearance).

There is therefor a need for a thermoplastic elastomer not having these deficiences.

The invention is characterized in that the thermoplastic elastomer comprises:

A) a thermoplastic resin
B) an amorphous polyolefin, selected from an amorphous $\alpha$-olefin homopolymer, in which the $\alpha$-olefin has 3-20 C-atoms, and an amorphous $\alpha$-olefin copolymer, based on ethylene and a $\alpha$-olefin having 3-20 C-atoms, and
C) an at least partially cured rubber,

wherein the ratio of component B to components (A + B) is between 15 and 75 wt.%, component C is present between 25 and 90 wt.% (based on (A+B+C)), and wherein the amorphous polyolefin component B is uncured.

The presence of component B is essential for obtaining the effects of the present invention. This component is uncured and should remain as such during further processsing.

The invention is specifically applicable in those cases where a high amount of rubber is desired (which also corresponds to low-hardness products). In EP-A-109,375 it is indicated that a too high amount of rubber results in crumb formation; in said publication this problem is (said to be) overcome by a two-step vulcanisation, where in each step only part of the total rubber is added and vulcanized. The thermoplastic elastomers of the present invention are obtainable with a one-step process.

The present invention provides also thermoplastic elastomers with a hardness of less than 35 Shore A. This is the more surprising, as a publication (in Plast. Techn. Jan. 1996, page 47) indicates that a 35 Shore A thermoplastic vulcanizate is the softest grade available.

In the following, the essential constituents of the thermoplastic elastomer of the present invention will be dealt with.

A) Thermoplastic resin

The thermoplastic resin may be any polymer which behaves like a thermoplast in the temperature range between 100 and 350°C; care should be taken that the processing temperature (i.e. the temperature at which the thermoplastic elastomer is prepared or used) is sufficiently lower than the decomposition temperature of the resin. Examples of such resin are thermoplastic resins like polyesters, nylons, polycarbonates, styrene/acrylonitril copolymers as well as the preferred thermoplastic polyolefin resins. In the latter case, preference is given to polyethylene and polypropylene, as a homopolymer as well as copolymers with up to 20 wt.% of another $\alpha$-olefin. The thermo- plastic resin preferably has a crystallinity (measured with DSC (differential scanning calorimetry)) of at least 25%.

B. Amorphous polyolefin

The amorphous polyolefin is a homo- or copolymer of an $\alpha$-olefin having an random structure, which deviates from the structures in crystalline polyolefins which are of the isotactic or syndiotactic form. In general these products have a crystallinity (measured by DSC) of less than 10%; preferably the crystallinity is below 3%.

The $\alpha$-olefin in an amorphous homopolyolefin can be any $\alpha$-olefin having 3-20 C-atoms; preference is given to propylene as the $\alpha$-olefin; i.e. preferred as component B) is amorphous polypropylene as the amorphous homopolyolefin. Next to or in stead of an amorphous homopolyolefin, component B can also be an random, or amorphous, $\alpha$-

olefin copolymer, based on ethylene and another higher $\alpha$-olefin as comonomer. A suitable comonomer is a comonomer with 3-20 C-atoms.

To be effective in the thermoplastic elastomer of the invention, component B has to have a number average molecular weight $M_n$ (determined with SEC-DV (size exclusion chromatography, coupled with a differential viscosimetry)) of at least 20,000. More preferably, the $M_n$ of component B is at least 25,000.

The component B has to be present in the thermoplastic elastomer in a (substantially) non-cured form. In case component B is curable, the occurance of such effect is to be avoided. This is especially the case in which the curative for component C can also cure component B (like e.g. a peroxide as curative). In such a case, and that is part of the process for preparing such a TPV, the component B is preferably to be added after the completion of the curing process of the rubber.

C. Cured rubber

The rubber present in the thermoplastic elastomer of the present invention may be any natural or synthetic rubber which can be cured with as such known curatives, like peroxides, phenolic resins, maleimides or silicon based curatives. Suitable rubbers according to the invention are acrylrubber, butylrubber, halogenated rubber (like brominated and chlorinated isobutylene-isoprene rubber) (styrene-) butadiene rubber, butadiene-styrene-vinylpyridine rubber, nitril rubber, natural rubber, urethane rubber, silicone rubber, polysulfide rubber, fluorcarbonyl rubber, ethylene/$\alpha$-olefin (diene)rubber (EA(D)M-rubber), polyisoprene, epichlorohydrine rubber, chlorinated polyethylene, polychloroprene, chlorosulphonated polyethylene. Preference is given to ethylene/$\alpha$-olefin/diene terpolymer (EADM) rubber and to butylrubber. The EADM contains as the second monomer an $\alpha$-olefin, which can be propylene, butene-1, pentene-1, hexene-1, octene-1 or the like or a branched isomer thereof like 4-methylpentene-1, and further styrene, $\alpha$-methylstyrene and the like. Also mixtures of $\alpha$-olefins are applicable. Preference is given to propylene and/or butene-1 as the $\alpha$-olefin. Greater preference is given to propylene; the resulting terpolymer is a ethylene/propylene/diene terpolymer (EPDM).

The third monomer in such an EADM or EPDM can be any conventionally applied monomer in such rubber, like hexadiene 1,4, dicyclopentadiene or ethylidene norbornene. Preference is given to ethylidene norbornene as third monomer.

The butylrubber, which can be an essential element of the thermoplastic elastomer of the present invention, is an amorphous copolymer of isobutylene and isoprene or an amorphous terpolymer of isobutylene, isoprene and a divinyl aromatic monomer. The term "butylrubber" also comprises the halogenated form of the above mentioned co- and terpolymer. Thermoplastic elastomers based on butylrubber are disclosed in e.g. US-A-4,130,534 and EP-A-376,227.

The thermoplastic elastomer comprises 25-90 wt.% of rubber (component C) per 100 parts of components (A + B + C), more preferably between 40-75 wt.%.

The amount of the thermoplastic resin (component A) is preferably between 5-25 wt.% per 100 parts of components (A+B+C). It has been found that such low amounts of thermoplastic resin in a thermoplastic elastomer are only attainable due to the presence of component B. In the absence thereof, the products become unprocessable after curing.

The relative amount of component B towards components (A + B) is general between 15 and 75 wt.%; more preferable this is between 20 and 70 wt.%.

Components A and B can form separate ingredients of the thermoplastic elastomer of the invention, but can also be constitients of a blend, prepared during a polymerization process. Such a blend, also referable to as amorphous elastomeric olefin polymer, is described in EP-A-475,306. Such products are made e.g. by Rexene under the trade mark Rexflex and marketed as flexible polyolefin.

The rubber in the thermoplastic elastomer (component C) is at least partially cured. One method for determining the degree of curing is by measuring the amount of rubber, extractable from the TPV by using boiling xylene as the extractant. Such a method can be found in e.g. US-patent no. 4,311,628.

According to such a method, the rubber (component C) in the thermoplastic elastomer of the invention is generally cured to the extent that not more than 50%, preferably not more than 15%, and even more preferred not more than 5%, of the rubber is extractable in boiling xylene.

The thermoplastic elastomer can contain other additives and fillers commonly used in these types of products, like carbon black, pigments, flame retardants, UV-stabilizers, UV-absorbers, processing aids, extender oils etc.

In case components A and B are not significantly compatible with each other, there are several ways to improve this. One possibility is the modification of component A and/or component B with the aid of functional groups which improve the compatibility of the two components A and B. This can be done for instance in the case the A-component is a polar resin, like nylon, by modifying the B-component through the introduction of a polar functionality in compound B, e.g. by grafting an anhydride of amine functional group to component B.

Another alternative is the use of a separate ingredient, suitable for compatibilizing the components A and B.

Such ingredients (or compatibilizers) are well known in the art and the skilled man is aware of the criteria to be applied in such case.

The process for preparing the thermoplastic elastomer can be any process by which a blend of an at least partially cured rubber and a thermoplastic resin can be obtained. Preference is given to a process in which the blend is made by dynamic curing (i.e. the process of mixing and curing of the rubber and the thermoplastic resin are taking place in one process step). It is to the skilled man to avoid severe premature curing while the mixing process is not completed. Reference can be given to the above mentioned US '628 and US '535 patents. Equipment to be used in a process according to the invention can be any mixing apparatus for blending polymers. Reference can be had to batch equipment (like Banbury mixers); preference is given to continuous operating equipment, like a twin screw extruder. Care should be taken that all ingredients are well-mixed.

In the process of the present invention it can be of advantage to premix components A) and B) before the incorporation of component C).

In case components B and C are both curable by the curing agent to be used for curing component C, the process for preparing the thermoplastic elastomer of the present invention should be such that component B is added after the (dynamic) vulcanisation of component C, or components A+C, is completed.

In case a thermoplastic elastomer with a high percentage of component C is to be made, care should be had that crumb formation is avoided. If this is a potential problem, then the addition of component C should be performed before the curing process. Alternatives are to be evaluated in case a co-curing of components B and C could occur. Possibilities (non-exhaustive) are selection of another type of amorphous product B or another type of curative (like a one which only cures component C and not component B).

The products of the present invention are useful for making a variety of articles like hoses or moldings. These articles can be made by extrusion, injection or compression moulding techniques. They are especially useful in those type of applications where the improved properties of the TPV are of excellent use, like in low-hardness applications (like the socalled soft-touch application) where the products can replace soft PVC, or where the reduced fogging and oil-swell are of interest. Examples of such applications can be speakercones, seales, tubings, medical containers and others.

The thermoplastic vulcanizates of the invention are also very suited to prepare elastic fibers. These fibers have a titer of 1-1000 tex, preferably between 2 and 500 tex and most preferred between 5 and 250 tex. (a "tex" being the weight (in grams) of 1000 mtrs of fiber (g/1000m)). The elongation at break amounts at least 100% and can be as high as 400% or even 600%. The fibers are suitable to give elastic properties to textile materials, fabrics and knittings. The fibers can also be used in combination with other fibers, like polyamide or cotton fibers. The fiber can be prepared by a melt spinning process of the thermoplastic elastomer of the present invention. The equipment suitable for such a process is known to the skilled man and comprises at least a unit containing the molten thermoplastic elastomer and a spinnerette having one or more openings to form the fibers from the molten thermoplastic elastomer. The equipment to produce the thermoplastic elastomer and the equipment to produce the fibers therefrom can be integrated in one apparatus, like in an extruder provided at its exit with a spinnerette.

The thermoplastic elastomer of the present invention has unexpectedly improved properties compared to conventional TPV's having a same content of at least partially cured rubber. It can be mentioned that especially the blow moldability, the tension set and the foamability are improved. As a result hereof, thermoformed products are now attainable in low hardness grades, products which uptill now were not available at all, or only available at a considerable higher costprice or with inferior physical properties.

The invention will be elucidated by the following examples and comparative experiments. They are not intended to form in any way a restriction of the invention.

The physical properties, as used in the Tables, are:

| CS | compression set, according to ISO 815 |
|---|---|
| M | elastic modulus, according to ISO 37 |
| TS | tensile strength, according to ISO 37 |
| EB | elongation at break, according to ISO 37 |
| ΔH | heat of crystallisation, determined by DSC |
| Tm | melting point, determined by DSC. |
| tex | weight (g) of 1000 metre fibre (g/1000m) |
| tenacity | according to BS 5421, part 2, 1978, and based on original fineness |
| tension set | 5 cm fibre is deformed up to 100, 200, 300 and 400% of its original length for 10 seconds, subsequently the fibre is allowed to relax tensionless for 1 hour (room temperature). |

The tension set is calculated from:

$$\text{Tension set [\%]} = \frac{\text{final length - initial length}}{\text{initial length}} * 100$$

## Example I

A thermoplastic elastomer was prepared based on a flexible polypropylene homopolymer Rexflex® FPO D100 of Rexene (containing 53 wt.% amorphous polypropylene as determined by immersion in cyclohexane (of an 0.1 mm film) at roomtemperature), and an EPDM (EPDM-1, being an ethylidene-norbornene (ENB) type EPDM with a $M_w$ (weight average molecular weight) of $6 \times 10^5$ (measured by SEC-DV)). The product was prepared in a dynamic vulcanisation process, using a Banbury mixer; SP 1045 (of Schenactady) was used as a phenolic curative. The ingredients used are given in Table I; the results in Table II.

## Example II

A TPV was made as per Example I, but instead of Rexflex FPO D100, a flexible polypropylene copolymer, Rexflex FPO D400 (containing 60 wt.% amorphous product) was used. Results are given in Table II.

## Comparative experiments A + B

Examples I and II were repeated, but now, instead of the Rexflex polymer, use was made of a polypropylene homo- resp. copolymer resin (PP1 having a meltflow index (determined at 230°C, with 2,16 kg., according to ISO 1133) of 1.2, resp. PP2 having a meltflowindex of 1.0).
The results are given in Table II.

TABLE I

| Examples/ Experiments | I-II/A-B |
|---|---|
| EPDM (component C) | 100 |
| Polyolefin (components A+B) | 42 |
| Talc | 40 |
| SP 1045 | 3.0 |
| $SnCl_2$. dihydrate | 3.0 |
| ZnO | 1.8 |
| Phenolic antioxidant | 0.9 |
| Extender oil | 164 |

All ingredients are given in parts per 100 parts of component C.

TABLE II

| Example/exp. | A | B | I | II |
|---|---|---|---|---|
| Hardness (A) | 54 | 45 | 27 | 24 |
| CS@23°C, % | 19 | 17 | 18 | 19 |
| $M_{100}$, MPa | 1.8 | 1.5 | 0.7 | 0.8 |
| $M_{200}$, MPa | 2.6 | 2.3 | 1.1 | 1.2 |
| $M_{300}$, MPa | 3.2 | 3.1 | 1.5 | --- |
| $M_{500}$, MPa | 4.5 | 4.4 | 2.1 | --- |
| TS, MPa | 4.7 | 6.0 | 2.2 | 1.5 |
| EB, % | 530 | 720 | 550 | 280 |

TABLE II   (continued)

| Example/exp. | A | B | I | II |
|---|---|---|---|---|
| ΔH, J/g | 11.8 | 9.7 | 2.3 | 1.6 |
| Tm, °C | 148 | 148 | 142 | 136 |

Examples III-VI

Example I was repeated, but as components A and B use was made resp. of PP1 and an amorphous ethylene/propylene copolymer (EP-1, with an $M_w$ of 1.9 * $10^5$, and a crystallinity of 5%) in different ratios. The sum of components A + B is as per Table I. The results are given in Table III.

TABLE III

| Example | III | IV | V | VI |
|---|---|---|---|---|
| PP1/EP-1 | 80/20 | 60/40 | 40/60 | 30/70 |
| Hardness (A) | 42 | 35 | 30 | 22 |
| CS @23°C, % | 24 | 18 | 22 | 25 |
| CS @70°C, % | 32 | 23 | 27 | 35 |
| CS @100°C, % | 34 | 26 | 32 | 36 |
| $M_{100}$, MPa | 1.2 | 0.9 | 0.8 | 0.5 |
| $M_{200}$, MPa | 1.9 | 1.6 | 1.3 | 0.8 |
| TS, MPa | 2.8 | 1.8 | 1.7 | 1.1 |
| EB, % | 410 | 240 | 290 | 290 |
| ΔH, J/g | 9.2 | 6.3 | 5.2 | 2.7 |
| Tm, °C | 150 | 150 | 150 | 150 |

Example VII

A thermoplastic elastomer was prepared based on a Rexflex FPO D100 of Rexene, and an EPDM (EPDM-2, being an ENB-type EPDM with an $M_w$ of 240,000). The product was prepared in a dynamic vulcanisation process, using a 350 cc Brabender Banbury mixer. The ingredients used are given in Table IV.
Subsequently the product was melt-spun to a monofilament elastic fibre, using a Gottfert Viscotester 1500. The results are given in Table V.

Example VIII

An elastic monofilament was made as per Example VII, but less Rexflex FPO D100 was used in the preparation of the thermoplastic elastomer. The ingredients are given in Table IV; the results in Table V.

Example IX

An elastic monofilament fibre was made as per Example VII, but instead of Rexflex FPO D100, Rexflex FPO 400 was used in the preparation of the thermoplastic elastomer. The ingredients are given in Table IV; the results in Table V.

Comparative experiment C

An elastic monofilament fibre was made as per Example VII, but instead of Rexflex FPO D100, use was made of PP1. The ingredients are given in Table IV; the results in Table V.

TABLE IV

| Examples/exp. | VII | VIII | IX | C |
|---|---|---|---|---|
| EPDM (component C) | 100 | 100 | 100 | 100 |
| Rexflex FPO D100 (component A+B) | 70 | 45 | - | - |
| Rexflex FPO D400 (component A+B) | - | - | 70 | - |
| PP1 | - | - | - | 70 |
| SP 1045 | 5 | 5 | 5 | 5 |
| $SnCl_2$. dihydrate | 1 | 1 | 1 | 1 |
| ZnO | 1 | 1 | 1 | 1 |
| Phenolic antioxidant | 0.7 | 0.5 | 0.7 | 0.7 |

TABLE V

| Examples/exp. | VII | VIII | IX | C |
|---|---|---|---|---|
| Fineness, tex | 105 | 110 | 107 | 132 |
| Tenacity, cN/tex | 1.8 | 1.4 | 1.7 | 3.8 |
| Elongation, % | 730 | 680 | 610 | 415 |
| Tension set at 100% | 5 | 3 | 4 | 5 |
| Tension set at 200% | 11 | 8 | 10 | 23 |
| Tension set at 300% | 19 | 17 | 19 | 50 |
| Tension set at 400% | 33 | 30 | 32 | 215 |
| Tension set at 200%, drawn fibre[1] | 3 | 2 | 3 | - |

[1]) fibre was drawn up to 400% (for 10 seconds) and relaxed for about 24 hours.

The melt-spun fibres have a low tension set after a large deformation (400%). A decrease in tension set is observed when the fibres are drawn (and relaxed) after the spinning proces. Furthermore an increase in tenacity and a small decrease in maximum elongation have been observed.

Examples X-XIV and comparative experiment D

Thermoplastic elastomers were made by dynamic vulcanization in a Brabender Banbury mixer. The ingredients are given in Table VI. Use was made of two homopolymers Rexflex FPO's (D100 and D1720), of two copolymers Rexflex FPO's (D400 and D1820) and, as comparison, use was made of PP1.
The rubber (component C) was in all cases EPDM-2.

TABLE VI

| Examples | X-XIII | XIV | D |
|---|---|---|---|
| EPDM (C) | 100 | 100 | 100 |
| Polyolefin (A+B) | 70 | 45 | 70 |
| SP 1045 | 5.2 | 5.2 | 5.2 |
| $SnCl_2$.dihydrate | 0.5 | 0.5 | 0.5 |

The results of tension set measurements, after 100%, 200%, 300% and 400% deformation and 1 and 12 hour unstrained relaxation, are given in Table VII.

TABLE VII

| Example/ Exp. | | Deformation 10 s at | Tension set [%] after 1 hours | Tension set [%] after 12 hours |
|---|---|---|---|---|
| X | Rexflex D100 | 100% | 5 | 4 |
| | | 200% | 12 | 10 |
| | | 300% | 21 | 18 |
| | | 400% | 36 | 30 |
| XI | Rexflex D1720 | 100% | 9 | 8 |
| | | 200% | 23 | 20 |
| | | 300% | 49 | 42 |
| | | 400% | 89 | 76 |
| XII | Rexflex D400 | 100% | 4 | 4 |
| | | 200% | 8 | 7 |
| | | 300% | 17 | 14 |
| | | 400% | 35 | 30 |
| XIII | Rexflex D1820 | 100% | 8 | 7 |
| | | 200% | 21 | 18 |
| | | 300% | 46 | 41 |
| | | 400% | 83 | 72 |
| XIV | Rexflex D100 | 100% | 3 | 3 |
| | | 200% | 8 | 7 |
| | | 300% | 17 | 14 |
| | | 400% | 33 | 27 |
| D | PP1 | 100% | 14 | 13 |
| | | 200% | 57 | 48 |
| | | 300% | 128 | 110 |
| | | 400% | 215 | 190 |

**Claims**

1. Thermoplastic elastomer comprising a blend of a rubber and a thermoplastic resin, the rubber being at least partially cured, characterized in that it comprises:

   A) a thermoplastic resin,
   B) an amorphous polyolefin, selected from an amorphous $\alpha$-olefin homopolymer, in which the $\alpha$-olefin has 3-20 C-atoms, and an amorphous $\alpha$-olefin copolymer, based on ethylene and a $\alpha$-olefin having 3-20 C-atoms, and
   C) an at least partially cured rubber,

   wherein the ratio of component B to components (A + B) is between 15 and 75 wt.%, the component C is present between 25 and 90 wt.% (based on (A + B + C)), and wherein the amorphous polyolefin (component B) is uncured.

2. Thermoplastic elastomer according to claim 1, characterized in that the thermoplastic resin has a DSC-crystallinity of at least 25%.

3. Thermoplastic elastomer according to anyone of claims 1-2, characterized in that the thermoplastic resin is a thermoplastic olefin resin.

4. Thermoplastic elastomer according to claim 3, characterized in that the thermoplastic olefin resin is selected from homo- or copolymers of polyethylene and polypropylene.

5. Thermoplastic elastomer according to anyone of claims 1-4, characterized in that the amorphous polyolefin is amorphous polypropylene.

6. Thermoplastic elastomer according to anyone of claims 1-5, characterized in that the amorphous polyolefin has a number average molecular weight $M_n$ of at least 25,000.

7. Thermoplastic elastomer according to any one of claims 1-6, characterized in that the rubber is selected from the group of EADM and butylrubber.

8. Thermoplastic elastomer according to anyone of claims 1-7, characterized in that the ratio of amorphous polyolefin to (thermoplastic resin + amorphous polyolefin) is 20-70 wt.%.

9. Thermoplastic elastomer according to anyone of claims 1-8, characterized in that a flexible polyolefine is used for the combination of components (A + B).

10. Thermoplastic elastomer according to anyone of claims 1-9, characterized in that the rubber is cured to the extend that not more that 15% of the rubber is extractable.

11. Thermoplastic elastomer according to claim 10, characterized in that not more than 5% of the rubber is extractable.

12. Thermoplastic elastomer according to anyone of claims 1-11, characterized in that the amount of component A is between 10-25 wt.% per 100 parts of components (A + B + C).

13. Process for the preparation of a thermoplastic elastomer according to anyone of claims 1-12 characterized in that the thermoplastic elastomer is prepared by mixing the components and subjecting the blend to a dynamic curing process.

14. Process according to claim 13, characterized in that components A + B are premixed, before they are blended with the other ingredients.

15. Process according to claim 13, characterized in that component B is added after the completed cure of component C.

16. Elastomeric fiber comprising a thermoplastic elastomer according to anyone of claim 1-12.


**Patentansprüche**

1. Thermoplastisches Elastomer, umfassend ein Gemisch aus einem Gummi und einem thermoplastischen Harz, wobei das Gummi mindestens teilweise gehärtet ist, dadurch gekennzeichnet, daß es

A) ein thermoplastisches Harz,
B) ein amorphes Polyolefin, ausgewählt aus einem amorphen $\alpha$-Olefin-Homopolymer, in welchem das $\alpha$-Olefin 3 bis 20 C-Atome aufweist, und einem amorphen $\alpha$-Olefin-Copolymer, das aus Ethylen und einem $\alpha$-Olefin mit 3 bis 20 C-Atomen basiert, und
C) ein mindestens teilweise gehärtetes Gummi

umfaßt, wobei das Verhältnis des Bestandteils B zu den Bestandteilen (A + B) zwischen 15 und 75 Gew.-% liegt, der Bestandteil C zwischen 25 und 90 Gew.-% vorhanden ist, (basierend auf (A + B + C)), und wobei das amorphe Polyolefin (Bestandteil B) nicht gehärtet ist.

2. Thermoplastisches Elastomer nach Anspruch 1, dadurch gekennzeichnet, daß das thermoplastische Harz eine DSC-Kristallinität von mindestens 25% aufweist.

3. Thermoplastisches Elastomer nach einem der Ansprüche 1 - 2, dadurch gekennzeichnet, daß das thermoplastische Harz ein thermoplastisches Olefinharz ist.

4. Thermoplastisches Elastomer nach Anspruch 3, dadurch gekennzeichnet, daß das thermoplastische Olefinharz aus Homo- oder Copolymeren von Polyethylen und Polypropylen ausgewählt ist.

5. Thermoplastisches Elastomer nach einem der Ansprüche 1 bis 4, dadurch gekennzeichnet, daß das amorphe Polyolefin amorphes Polypropylen ist.

6. Thermoplastisches Elastomer nach einem der Ansprüche 1 bis 5, dadurch gekennzeichnet, daß das amorphe Polyolefin ein zahlenmittleres Molekulargewicht $M_n$ von mindestens 25.000 aufweist.

7. Thermoplastisches Elastomer nach einem der Ansprüche 1 bis 6, dadurch gekennzeichnet, daß das Gummi aus der Gruppe von EADM und Butylgummi ausgewählt ist.

8. Thermoplastisches Elastomer nach einem der Ansprüche 1 bis 7, dadurch gekennzeichnet, daß das Verhältnis von amorphem Polyolefin zu (thermoplastisches Harz + amorphes Polyolefin) 20 bis 70 Gew.-% beträgt.

9. Thermoplastisches Elastomer nach einem der Ansprüche 1 bis 8, dadurch gekennzeichnet, daß ein flexibles Polyolefin für die Kombination der Bestandteile (A + B) verwendet wird.

10. Thermoplastisches Elastomer nach einem der Ansprüche 1 bis 9, dadurch gekennzeichnet, daß das Gummi soweit gehärtet wird, daß nicht mehr als 15% des Gummis extrahierbar ist.

11. Thermoplastisches Elastomer nach einem der Anspruch 10, dadurch gekennzeichnet, daß nicht mehr als 5% des Gummis extrahierbar ist.

12. Thermoplastisches Elastomer nach einem der Ansprüche 1 bis 11, dadurch gekennzeichnet, daß die Menge des Bestandteils A zwischen 10 bis 25 Gew.-%, bezogen auf 100 Teile der Bestandteile (A + B + C), beträgt.

13. Verfahren zur Herstellung eines thermoplastischen Elastomers nach einem der Ansprüche 1 bis 12, dadurch gekennzeichnet, daß das thermoplastische Elastomer durch Mischen der Bestandteile und dem Unterwerfen des Gemischs einem dynamischen Härtungsverfahren hergestellt wird.

14. Verfahren nach Anspruch 13, dadurch gekennzeichnet, daß die Bestandteile A + B vorgemischt werden, bevor sie mit den anderen Inhaltsstoffen vermischt werden.

15. Verfahren nach Anspruch 13, dadurch gekennzeichnet, daß der Bestandteil B nach der beendeten Härtung des Bestandteils C zugegeben wird.

16. Elastomere Faser, die ein thermoplastisches Elastomer nach einem der Ansprüche 1 bis 12 umfaßt.

**Revendications**

1. Elastomère thermoplastique comprenant un mélange d'un caoutchouc et d'une résine thermoplastique, le caoutchouc étant au moins partiellement durci, caractérisé en ce qu'il comprend :

A) une résine thermoplastique
B) une polyoléfine amorphe, choisie parmi un homopolymère d'$\alpha$-oléfine amorphe, dans lequel l'$\alpha$-oléfine comprend 3-20 atomes de C, et un copolymère d'$\alpha$-oléfine amorphe, à base d'éthylène et d'une $\alpha$-oléfine comprenant 3-20 atomes de C, et
C) un caoutchouc au moins partiellement durci,

dans lequel le rapport du composant B aux composants (A + B) est compris entre 15 et 75% en poids, le composant C est présent en une proportion comprise entre 25 et 90% en poids (par rapport à (A + B + C)), et dans lequel la polyoléfine amorphe (composant B) n'est pas durci.

2.  Elastomère thermoplastique selon la revendication 1, caractérisé en ce que la résine thermoplastique a une cristallinité en DSC d'au moins 25%.

3.  Elastomère thermoplastique selon l'une quelconque des revendications 1-2, caractérisé en ce que la résine thermoplastique est une résine d'oléfine thermoplastique.

4.  Elastomère thermoplastique selon la revendication 3, caractérisé en ce que la résine d'oléfine thermoplastique est choisie parmi des homo- ou copolymères de polyéthylène et de polypropylène.

5.  Elastomère thermoplastique selon l'une quelconque des revendications 1-4, caractérisé en ce que la polyoléfine amorphe est du polypropylène amorphe.

6.  Elastomère thermoplastique selon l'une quelconque des revendications 1-5, caractérisé en ce que la polyoléfine amorphe a une masse moléculaire en nombre $M_n$ d'au moins 25 000.

7.  Elastomère thermoplastique selon l'une quelconque des revendications 1-6, caractérisé en ce que le caoutchouc est choisi dans l'ensemble constitué d'EADM et de caoutchouc butyl.

8.  Elastomère thermoplastique selon l'une quelconque des revendications 1-7, caractérisé en ce que le rapport de polyoléfine amorphe aux (résine thermoplastique + polyoléfine amorphe) est de 20-70% en poids.

9.  Elastomère thermoplastique selon l'une quelconque des revendications 1-8, caractérisé en ce que l'on utilise une polyoléfine flexible pour la combinaison de composants (A + B).

10. Elastomère thermoplastique selon l'une quelconque des revendications 1-9, caractérisé en ce que le caoutchouc est durci jusqu'à ce que pas plus de 15% du caoutchouc ne soient extractibles.

11. Elastomère thermoplastique selon la revendication 10, caractérisé en ce que pas plus de 5% du caoutchouc ne soient extractibles.

12. Elastomère thermoplastique selon l'une quelconque des revendications 1-11, caractérisé en ce que la quantité de composants A est comprise entre 10 et 25% en poids pour 100 parties de composants (A + B + C).

13. Procédé de préparation d'un élastomère thermoplastique selon l'une quelconque des revendications 1-12, caractérisé en ce que l'élastomère thermoplastique est préparé en mélangeant les composants et en soumettant le mélange à un procédé de durcissement dynamique.

14. Procédé selon la revendication 13, caractérisé en ce que les composants A + B sont pré-mélangés, avant d'être mélangés avec les autres ingrédients.

15. Procédé selon la revendication 13, caractérisé en ce que le composant B est ajouté après achèvement du durcissement terminé du composant C.

16. Fibre élastomère comprenant un élastomère thermoplastique selon l'une quelconque des revendications 1-12.